(19) **Europäisches Patentamt**
**European Patent Office**
**Office européen des brevets**

(11) **EP 4 166 344 A1**

(12) **EUROPEAN PATENT APPLICATION**
published in accordance with Art. 153(4) EPC

(43) Date of publication:
**19.04.2023 Bulletin 2023/16**

(21) Application number: **21821331.2**

(22) Date of filing: **11.06.2021**

(51) International Patent Classification (IPC):
**B43K 19/00** (2006.01)    **C09D 13/00** (2006.01)

(52) Cooperative Patent Classification (CPC):
**B43K 19/00; C09D 13/00**

(86) International application number:
**PCT/JP2021/022271**

(87) International publication number:
**WO 2021/251480 (16.12.2021 Gazette 2021/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.06.2020   JP 2020102452**

(71) Applicant: **MITSUBISHI PENCIL COMPANY,
LIMITED
Tokyo
140-8537 (JP)**

(72) Inventors:
• **KUBO Ryota
  Fujioka-shi, Gunma 375-8501 (JP)**
• **BANZAI Satoru
  Fujioka-shi, Gunma 375-8501 (JP)**

(74) Representative: **Vossius & Partner
Patentanwälte Rechtsanwälte mbB
Siebertstraße 3
81675 München (DE)**

(54) **FIRED SOLID DRAWING MATERIAL**

(57)    A calcined solid drawing material capable of drawing a line excellent in color development and transparent while having a high strength regardless of a black core or a colored core. The calcined solid drawing material is provided with a skeleton core constituted by at least an extender and a binder component, and a drawn line permeability T of the drawn line calculated by the following equation (I) is 0.8 or more:

$$T = (L^*w - L^*b)/(L^*b - L^*p) \qquad (I)$$

L*w: brightness of a drawn line written on white paper
L*b: brightness of a drawn line written on a black paper
L*p: brightness of the black paper.

**Description**

Technical Field

The present invention relates to a calcined solid drawing material having a high strength and capable of drawing drawn lines of good color development and transparency.

Background Art

Known as conventional solid drawing materials are, for example,

1) solid drawing materials characterized by using an aliphatic carboxylic acid salt having 8 to 36 carbon atoms as a gel forming substance and containing 1 to 40% by weight of a colorant, a nonionic surfactant and 0 to 40% by weight of water as a solid drawing material excellent in a drawing property and fixability, having a good drawing property when overpainting and capable of being used as a fluorescent marker (refer to, for example, a patent document 1),
2) solid drawing materials including a plurality of coloring materials blended with at least colorants as a solid drawing material having drawn lines embodying plural colors, characterized by having a plurality of colors on a cross section of the solid drawing material, having a structure in which the colorants themselves are fused and in which a thixotropic agent such as a smectite clay mineral is contained in the colorants (refer to, for example, a patent document 2),
3) solid drawing materials characterized by including forming materials such as at least a colorant, wax, a gel forming agent, a clay and a surfactant, and fine hollow powder as a solid drawing material having a glue condition (abrasion property) on a smooth surface of glass, metal, plastic and the like (refer to, for example, a patent document 3),
4) solid drawing materials including a plurality of coloring materials blended with at least colorants as a solid drawing material having drawn lines embodying plural colors, characterized by having a plurality of colors on a cross section of the solid drawing material and containing a scaly brilliant substance (refer to, for example, a patent document 4), and
5) calcined color pencil core impregnated with an ink containing glycol ether having a boiling point of 250°C or higher and a fluorescent dye in a pore of a calcined core body including an extender and an inorganic binding material as a calcined color pencil core having a smooth writing feeling, excellent in color developability, less aging change in the calcined color pencil core and the handwriting and excellent in excellent in storage stability (refer to, for example, a patent document 5).

However, the existing situation is that the patent documents 1 to 4 described above relates to non-calcined solid drawing materials and involves a problem of a fragile strength.

The patent document 5 described above relates to a calcined solid drawing material and still involves a room of improvement in color developability and involves the problem that sufficiently transparent characters which do not damage visibility.

Prior Art Documents

Patent documents

Patent document 1: JP-A 2016-302269 (claims, examples and the like)
Patent document 2: JP-A 2004-285250 (claims, examples and the like)
Patent document 3: JP-A 2004-315602 (claims, examples and the like)
Patent document 4: JP-A 2005-23182 (claims, examples and the like)
Patent document 5: JP-A 2019-99633 (claims, paragraph 0007 and the like)

Disclosure of the Invention

Considering the conventional problems, the existing situation described above and the like, the present invention intends to solve them and provide a calcined solid drawing material having a high strength and capable of drawing drawn lines of good color development and transparency.

Considering the conventional problems described above and the like, intense investigations repeated by the present inventors have resulted in finding that the calcined solid drawing material which meets the object described above is obtained by controlling a drawn line permeability T of a drawn line of a calcined solid drawing material provided with a skeleton core constituted by at least an extender and a binder component to a specific value, and thus, they have come to complete the present invention.

That is, the calcined solid drawing material of the present invention is provided with a skeleton core constituted by at least an extender and a binder component, and a drawn line permeability T of the drawn line calculated by the following equation (I) is 0.8 or more:

$$T = (L^*w - L^*b)/(L^*b - L^*p) \qquad (I)$$

L*w: brightness of a drawn line written on a white paper
L*b: brightness of a drawn line written on a black paper
L*p: brightness of the black paper.

The calcined solid drawing material has a drawn line brightness (L*) of preferably 60 or lower when drawn on a black paper having a brightness of 28.

Tal is preferably contained as the extender.

Smectite group clay is preferably contained as the binder component described above and is preferably industrially synthesized and produced.

According to the present invention, provided is the calcined solid drawing material having a high strength and capable of drawing a transparent drawn line having a good color development regardless of a black core and a colored core.

Purposes and effects of the present invention are recognized and obtained by using constitutional elements and combinations pointed out particularly in the claims. In the present specification, both said general descriptions and detailed descriptions described later are exemplary and explanatory and do not restrict the present invention described in the scopes of the claims.

MODE FOR CARRYING OUT THE INVENTION

At least several embodiments of the present invention will be explained below in detail, and it should be taken notice that the technical scope of the present invention will not be restricted by the respective embodiments and covers the invention described in the claims and the equivalents thereof. The present invention can be performed based on the contents disclosed in the present specification and the common general technical knowledge (including matters of workshop modification and obviousness items).

The calcined solid drawing material of the present invention is provided with a skeleton core constituted by at least an extender and a binder component, and a drawn line permeability T of the drawn line calculated by the following equation (I) is 0.8 or more:

$$T = (L^*w - L^*b)/(L^*b - L^*p) \qquad (I)$$

L*w: brightness of a drawn line written on a white paper
L*b: brightness of a drawn line written on a black paper
L*p: brightness of the black paper.

The calcined solid drawing material of the present invention is not specifically limited in a production method thereof as long as a drawn line permeability T of the drawn line calculated by the equation (I) described above is 0.8 or more; for example, respective components such as at least an extender, a binder component, and if necessary a plasticizer, to be specific, the respective components (at least the extender, the binder component and the like) used for a skeleton core are kneaded, molded, dried and calcined under a non-oxidizing atmosphere and/or an atmospheric environment to obtain respective skeleton cores of porous calcined solid drawing materials; pores of the skeleton cores are impregnated with alcohol dissolving a resin dissolving or involving a dye such as an oil-soluble dye, a salt-making dye, a fluorescent dye and the like, or colorants such as dyes and/or pigments are dissolved, dispersed in animal and vegetable oils, synthetic oil, alcohols, hydrocarbon oil, water and the like, or if necessary, a resin, a surfactant and the like are further added to prepare a printing ink, a stamp ink and a ball-point pen ink which are usually used, and the pores of the skeleton cores are impregnated with the inks and, if necessary, a lubricant oil; thus, the calcined solid drawing material can be produced.

A method for impregnating the coloring components described above includes, for example, dipping the skeleton cores (calcined core body) into ink to impregnate the ink into the pores under conditions of heating, reduced pressure, pressurization and the like, and repeated impregnation is allowed.

The extender usable in the present invention will not be restricted as long as it is used for a skeleton core of a conventional calcined solid drawing material, and any one can be used. For example, white extenders and colored extenders such as boron nitride, kaolin (kaolinite, halloysite), talc, mica, calcium carbonate and the like can be used, and naturally, the mixtures thereof can be used as well. Boron nitride, kaolin and talc are preferably used from the viewpoints of the physical properties and the shapes, while talc is particularly preferably used from the view points of the low hardness and the low refractive index. A use amount of the talc is preferably 50 to 100 % by mass against a whole amount of the extender, more preferably 80 to 100 % by mass.

The talc used has a white degree of preferably 80 or more. The white degree of the talc can be measured by a Hunter method.

Particles of the talc used have a volume average particle diameter of preferably 4 to 12 $\mu$m, more preferably 6 to 10 $\mu$m.

Further, the talc used may be non-treated or treated on a surface thereof. A surface treating method includes chemical or physical treatment using treating agents such as a silane coupling agent, higher fatty acid, fatty acid metal salt, unsaturated organic acid, organic titanate, acid and acid anhydride.

The usable binder component will not specifically be restricted as long as it is used for a skeleton core of a conventional calcined solid drawing material, and any one can be used. For example, it includes celluloses such as carboxymethyl cellulose and the like, polyvinyls such as polyvinylpyrrolidone and the like, polyethers such as polyoxyethylene and the like, acrylic acids such as polyacrylic acid and the like, inorganic polymers such as tetraethyl orthosilicate (TEOS) condensate and the like, clay minerals (hereinafter "clay minerals" will be referred to merely "clay") including smectite group such as hectorite, montmorillonite, nontronite, saponite and the like, thermoplastic synthetic resins, ceramic glass and the like. They can be used alone or in a mixture of two or more kinds thereof.

The smectite group clay such as hectorite, montmorillonite, nontronite, saponite and the like is preferably used from the viewpoints of a production step, a strength and writing feeling.

The used smectite group may be natural origin and synthetic smectite clay industrially synthesized, and the synthetic smectite clay is more preferably used.

The synthetic smectite clay is different from the natural origin smectite. That is, the synthetic smectite is constituted from only raw material origin elements, so that usually it contains significantly reduced amounts of impurities and organics and the like and has a small crystal size. Accordingly, the synthetic smectite has less color and can enhance transparency of products prepared by using the synthetic smectite.

The synthetic smectite clay can control an ion exchangeable amount (cation exchange capacity: CEC) which is an index showing a characteristic of the smectite according to a raw material composition in synthesis. It has an advantage of making it possible to synthesize having desired CEC without passing through heat treatment at high temperature and the like.

The used synthetic smectite clay is preferably at least one selected from montmorillonite, beidellite, hectorite, saponite and stevensite. Stevensite, hectorite and saponite are preferred due to the easiness of industrial production and commercial availability. Among them, saponite is preferably used from the viewpoints of production cost, strength and writing feeling.

The used synthetic smectite clay can be synthesized by a conventional method. For example, raw materials are mixed to a desired composition to prepare a starting gel, and the gel is subjected to hydrothermal treatment to synthesize smectite. A hydrothermal synthetic method can be carried out by using a Moree type reactor or an autoclave. CEC of the resulting synthetic smectite can be adjusted to a desired low level by suitably adjusting the raw material composition in synthesis by a conventional method.

Products on the market can be used for the synthetic smectite. The products on the market which can be suitably used include, for example, Smecton SA, Smecton ST, Smecton SWN, Smectite SWF, Kunipia SAN (all manufactured by KUNIMINE INDUSTRIES CO., LTD.), Somasihu ME-100 (manufactured by Katakura & Co-op Agri Corporation), Laponite RDS which is synthetic hectorite (manufactured by Rockwood Additives Corporation).

A use amount of these smectite group clays is preferably 50 to 100% by mass, more preferably 80 to 100% by mass based on a whole amount of the binder component.

The used thermoplastic synthetic resin includes, for example, polyvinyl alcohol, polyvinyl chloride, polychlorinated polyvinyl chloride, vinyl chloride vinyl acetate copolymer, polyamide, polyethylene, polypropylene, polyether ether ketone and the like.

The used plasticizer can preferably dissolve the thermoplastic synthetic resins described above and includes, to be specific, dioctyl phthalate (DOP), dibutyl phthalate (DBP), tricresyl phosphate, dioctyl adipate, diallyl isophthalate, propylene carbonate, alcohols, ketones, esters and the like.

A specific skeleton core of the calcined solid drawing material includes, for example, a skeleton core (calcined core body) obtained by blending at least natural smectite and talc and calcining them, a skeleton core (calcined core body) obtained by blending at least synthetic smectite and talc and calcining them, a skeleton core (calcined core body) obtained by blending at least synthetic smectite, talc, a thermoplastic resin and a plasticizer and calcining them, and the like.

In the calcined solid drawing material of the present invention, the respective components including the binder component including the said extender and the smectite group clay, the plasticizer, water are suitably combined and blended so that a drawn line permeability T of the drawn line written with the calcined solid drawing material provided with the skeleton core described above calculated by the said equation (I) is 0.8 or more. To be specific, prescribed amounts of the respective components (at least the extender, the binder component, the plasticizer) used for a mechanical pencil and the components for a calcined solid drawing material other than a mechanical pencil are kneaded, molded, dried and calcined under a non-oxidizing atmosphere and/or an atmospheric environment to obtain skeleton cores (calcined skeleton cores) of respective porous calcined solid drawing materials; a resin dissolving and/or involving a dye is impregnated into pores of the core body of the calcined solid drawing material using alcohol, or a coloring component such as the said dye and/or dye, and preferably a lubricant oil is further filled; thus, the calcined solid drawing material can be produced.

The usable dye includes oil-soluble dyes, salt-making dyes constituted by a cation of dimethyldistearylammonium salt and an acid dye, fluorescent dyes from the viewpoints of erasability and water resistance.

The oil-soluble dyes include, for example, C. I. Solvent Yellow 2, C. I. Solvent Yellow 6, C. I. Solvent Red 25, C. I. Solvent Red 49, C. I. Solvent Violet 8, C. I. Solvent Blue 25, C. I. Solvent Black 22 and the like, and products there on the market; the acid dye includes, for example, C. I. Acid Yellow 1, C. I. Acid Yellow 3, C. I. Acid Orange 10, C. I. Acid Orange 28, C. I. Acid Red 51, C. I. Acid Red 57, C. I. Acid Violet 7, C. I. Acid Blue 22, C. I. Acid Green 40, C. I. Acid Brown 45, C. I. Acid Black 51 and the like, and products there on the market.

The fluorescent dyes include, for example, C. I. Basic Red 1, C. I. Basic Yellow 1, C. I. Basic Yellow 40, C. I. Basic Violet 11 and the like. Fluorescent pigments prepared by dissolving the said fluorescent dyes in synthetic resins to form fine powder can be used. Such usable fluorescent pigments include Sinloihi Color SB-15 (yellow, manufactured by Sinloihi Co. Ltd.), Epo Color FP series such as Epo Color FP-112 (pink) (manufactured by Nippon Shokubai Co. Ltd.), NKW-2100E series, NKW-6200E series (manufactured by Japan Fluorescence Co., Ltd.), Ryudye-LUMINOUS series (manufactured by DIC Corporation).

The resin used for dissolving the dye to used has to be soluble in alcohols with low solution viscosity and have a good affinity to the dye to be used and includes, for example, various modified phenol resins, ketone resins, maleic acid resins, aldehyde resins.

The resin involving the dye involves the dye in a resin molecule and includes, for example, a dyeing resin and a doping dye.

A resin dissolving the dyes and a resin involving the resins including dyes include, for example, resins which are insoluble in water such as butyral resins, various modified phenol resins, ketone resins, maleic acid resins, aldehyde resins, alkyl celluloses such as ethyl cellulose, acryl resins, sulfonic acid resins and the like, and these resins are soluble in organic solvents.

The organic solvents include, for example, isopropyl alcohol (IPA), ethanol, methoxymethylbutanol, benzyl alcohol, toluene, xylene, acetone, methyl ethyl ketone, ethyl acetate, ethyl cellosolve, phenyl cellosolve, benzyl alcohol and the like.

The resin dissolving the dyes include, to be specific, a method of kneading a dye for coloring a resin into a resin, a method of dissolving a dye and a resin in an organic solvent at a prescribed mass ratio, to be specific, dye : resin of 10 : 1 to 1 : 2, preferably 3 : 1 to 1 : 1 in terms of a mass ratio and using it as it is, a method of drying and then using it.

The resin involving the dyes include, to be specific, a method of adding a dye in a polymerization process, a method of chemically bonding a dye to a resin molecule. In the above cases, the ratio of dye : resin is 5 : 1 to 1 : 3, preferably 3 : 1 to 1 : 1 in terms of a mass ratio.

More preferably, the resin dissolving or involving the dye is a film shape having a thickness of 1 $\mu$m or less. This film shape of a thickness of 1 $\mu$m or less can be achieved by impregnating the dye into a porous pencil core having a pore diameter of 1 $\mu$m or less or controlling a concentration of the dye in the organic solvent to an appropriate level.

The used lubricant includes, for example, paraffin oil, $\alpha$-olefin oil, ester oils such as fatty acid esters, alkylene glycol ethers, synthetic oils such as silicone oils, vegetable oils such as castor oil, wax, grease and the like.

In the present invention, a calcined solid drawing material can be produced by dispersing and mixing, for example, (a) 30 to 60% by mass of an extender such as talc in total, (b) 5 to 15% by mass of a binder component such as smectite group clay, (c) 25 to 65% by mass of a thermoplastic resin and plasticizer, by means of a Henscel mixer, kneading by means of a pressurizing kneader or a twin rolls, molding a mixture by means of an extrusion molding device, then drying it at 110 to 250°C in an electric furnace, next, calcining it at 300 to 750°C for 20 to 100 hours under non-oxidizing atmosphere (under nitrogen atmosphere, under inactive gas atmosphere) and/or under oxidizing atmosphere (under open atmosphere, under steam and the like) to obtain a solid drawing material core body; pores of the solid drawing material core bodies are impregnated with alcohol dissolving a resin dissolving or involving the dye such as the said oil-soluble dye, salt-making dye, fluorescent dye and the like, or the pores are impregnated with the coloring component such as the said dye and/or pigment and dried, further filled preferably with a lubricant oil, whereby the calcined solid drawing material can be produced.

In the resulting calcined solid drawing material, a content of the resin dissolving or involving the dye is varied according to a molding kind, a solvent kind and a dye kind and is preferably 3 to 50% by mass, more preferably 5 to 30% by mass based on a whole amount of the calcined solid drawing material from the viewpoints of causing a balance between a hue, a light resistance and a strength to a high degree.

The calcined solid drawing material of the present invention is, as described above, a calcined solid drawing material provided with a skeleton core including at least an extender and a binder component and it has to have a drawn line permeability T of 0.8 or more of the drawn line calculated by the equation (I) described above.

The drawn line permeability T can be adjusted to 0.8 or more by suitably combining the extender and the binder component described above. For example, talc is, as described above, preferably contained, and smectite group clay is preferably contained. Further, the calcined solid drawing material can be prepared by using each prescribed amount of the smectite group clay produced by being industrially synthesized.

The (CIE LAB) color system such as L* described above is one of the methods of representing a color tone for evaluating a hue and expresses a color visible to the eye as a color space, which is establiched by Commission Internationale de l'Éclairage (CIE). This brightness (L* value) is an index showing tendency of blackness.

In the present invention, the drawn line permeability T is obtained by dividing (1) a difference between a brightness of a white paper drawn line and a brightness of a black paper drawn line, or (L*w - L*b), by (2) a difference between a brightness of the black paper drawn line and a brightness of the black paper, or (L*b - L*p). In (1) described above, when the drawn linesare transparent, a difference between the black paper drawn line and the white paper drawn line is increased, so that a numerical value becomes higher, and (2) described above shows a brightness possessed by the solid drawing material itself. The value obtained by dividing (1) by (2) becomes an index representing permeability taking brightness of the drawn line into account. It is particularly desirable that the drawn line permeability T is increased to 1.2 or more in order to further demonstrate an effect of the present invention.

In the calcined solid drawing material, a drawn line brightness (L*) is preferably 60 or less, more preferably 50 or less and particularly preferably 45 or less from the viewpoints of drawn line permeability and visibility of under characters when written on a black paper having a brightness of 28. In the present disclosure, the black paper of brightness of 28 is used because high quality of black papers have a brightness of about 28 in average which is considered to be suited to writing and selected among the general black papers having a brightness of 25 to 30 or so.

The calcined solid drawing material of the present invention is not restricted to the embodiment described above, is variously varied in a scope of a technical idea of the present invention and can be performed. For example, a method of filling the resin dissolving or involving the dye may be a method dissolving the resin in wax and a method of heating and impregnating the dye.

The calcined solid drawing material of the present invention can be molded into various shapes and sizes according to solid drawing material kinds (mechanical pencil, wooden shaft, holder and the like); and optional shapes and sizes, for example, a cylindrical shape having square cross section can be selected.

The calcined solid drawing material of the present invention which is constituted in the said manner can draw lines which have good color development and are transparent while having a high strength regardless of a black core or a colored core owing to the following action mechanism.

That is, a solid drawing material obtained by calcining treatment causes a permeability of a skeleton core itself to be compatible with strength by suitably selecting ones having a relatively low refraction index represented by talc and ones having a high purity, a high whiteness and a fine particle diameter represented by synthetic smectite, so that drawn lines of the solid drawing material in which the skeleton core is colored by a colorant mainly including a dye are enhanced as well in transparency. In such the drawn lines, paper fibers can be seen through when magnified and observed, and it is considered that light comes into an inner side of the drawn line than a conventional core having low permeability and diffusing light mainly on a surface of the drawn line, whereby a colorant in an inside of the drawn line contributes to coloring. As a result, the calcined solid drawing material capable of drawing well-colored and transparent lines regardless of a black core or a colored core is obtained.

Further, in the present invention, a colored liquid component is not contained, so that bleeding is not caused. And by use of the solid drawing material for underlines, a coated part can be highlighted without concealing back ground.

EXAMPLES

Next, the present invention shall be explained in further details with reference to examples and comparative examples, but the present invention shall not be restricted by the following examples and the like.

Example 1

| | |
|---|---|
| Natural smectite (Kunipia F manufactured by KUNIMINE INDUSTRIES CO., LTD.) | 15 parts by mass |
| Talc (Micro Ace P-3, manufactured by Nippon Talc Co., Ltd.) | 35 parts by mass |
| Vinyl chloride resin | 30 parts by mass |
| Dioctyl phthalate | 20 parts by mass |

The blend formulations described above were kneaded and circularly extrude-molded by means of an extruding device, and the molding was heated at 600°C under inactive gas atmosphere for 24 hours to prepare a skeleton core (calcined core body) of natural smectite and talc. This skeleton core was heated at 700°C under ambient atmosphere for 48 hours to obtain a talc natural clay skeleton core. This skeleton core was impregnated with the following blend formulation 1 and dried at 50°C for 17 hours.

Blend formulation 1:

| | |
|---|---|
| Spilon Red C-PH (manufactured by Hodogaya Chemical Co., Ltd.) | 20% by mass |
| Terpene phenolic resin (manufactured by Yasuhara Chemical Co., Ltd.) | 10% by mass |
| Methyl ethyl ketone (MEK) | 70% by mass |

Dimethyl silicone oil (manufactured by Shin-Etsu Co., Ltd.) was impregnated into pores obtained by drying at 120°C for 17 hours to obtain a red calcined solid drawing material having a diameter of 1.0 mm and a length of 60 mm.

Example 2

| | |
|---|---|
| Synthetic smectite (Smecton SA manufactured by KUNIMINE INDUSTRIES CO., LTD.) | 10 parts by mass |
| Talc (Micro Ace P-3, manufactured by Nippon Talc Co., Ltd.) | 40 parts by mass |
| Vinyl chloride resin | 30 parts by mass |
| Dioctyl phthalate | 20 parts by mass |

The blend formulations described above were kneaded, extrude-molded and subjected to heat treatment (inactive gas atmosphere, ambient atmosphere) on the same conditions as in Example 1 described above to obtain a talc synthetic clay skeleton core, and the resulting talc synthetic clay skeleton core was impregnated with dimethyl silicone oil on the same conditions as in Example 1 described above to obtain a white calcined solid drawing material having a diameter of 0.9 mm and a length of 60 mm.

Example 3

The talc synthetic clay skeleton core described in Example 2 was impregnated with the blend formulation 1 and the dimethyl silicone oil on the same conditions as in Example 1 described above to obtain a red calcined solid drawing material having a diameter of 0.9 mm and a length of 60 mm.

Example 4

Blend formulation 2:

| | |
|---|---|
| Spilon Blue C-RH (manufactured by Hodogaya Chemical Co., Ltd.) | 10% by mass |
| Terpene phenolic resin | 20% by mass |

(continued)

| | |
|---|---|
| MEK | 70% by mass |

The talc synthetic clay skeleton core described in Example 2 was impregnated with the blend formulation 2 and the dimethyl silicone oil on the same conditions as in Example 1 described above to obtain a light blue calcined solid drawing material having a diameter of 0.9 mm and a length of 60 mm.

Example 5

Blend formulation 3:

| | |
|---|---|
| Spilon Violet C-RH (manufactured by Hodogaya Chemical Co., Ltd.) | 7% by mass |
| Spilon Yellow C-GNH (manufactured by Hodogaya Chemical Co., Ltd.) | 13% by mass |
| Terpene phenolic resin | 10% by mass |
| MEK | 70% by mass |

The talc synthetic clay skeleton core described in Example 2 was impregnated with the blend formulation 3 and the dimethyl silicone oil on the same conditions as in Example 1 described above to obtain a black calcined solid drawing material having a diameter of 0.9 mm and a length of 60 mm.

Comparative Example 1

| | |
|---|---|
| Synthetic smectite | 10 parts by mass |
| Boron nitride (Denka Boron Nitride GP, manufactured by Denka Co., Ltd.) | 40 parts by mass |
| Vinyl chloride resin | 30 parts by mass |
| Dioctyl phthalate | 20 parts by mass |

The blend formulations described above were kneaded, extrude-molded and subjected to heat treatment (inactive gas atmosphere, ambient atmosphere) on the same conditions as in Example 1 described above to obtain a BN synthetic clay skeleton core, and the resulting BN synthetic clay skeleton core was impregnated with the dimethyl silicone oil on the same conditions as in Example 1 described above to obtain a white calcined solid drawing material having a diameter of 0.9 mm and a length of 60 mm.

Comparative Example 2

The BN synthetic clay skeleton core described in Comparative Example 1 was impregnated with the blend formulation 1 and the dimethyl silicone oil on the same conditions as in Example 1 described above to obtain a red calcined solid drawing material having a diameter of 0.9 mm and a length of 60 mm.

Comparative Example 3

The BN synthetic clay skeleton core described in Comparative Example 1 was impregnated with the blend formulation 2 and the dimethyl silicone oil on the same conditions as in Example 1 described above to obtain a light blue calcined solid drawing material having a diameter of 0.9 mm and a length of 60 mm.

Comparative Example 4

| | |
|---|---|
| Graphite (CSP, manufactured by Nippon Graphite Industry Co., Ltd.) | 50 parts by mass |
| Vinyl chloride resin | 30 parts by mass |

(continued)

| Dioctyl phthalate | 20 parts by mass |
|---|---|

The blend formulations described above were kneaded, extrude-molded and subjected to heat treatment (inactive gas atmosphere) on the same conditions as in Example 1 described above to obtain a black synthetic clay skeleton core, and the resulting black synthetic clay skeleton core was impregnated with the dimethyl silicone oil on the same conditions as in Example 1 described above to obtain a black calcined solid drawing material having a diameter of 0.9 mm and a length of 60 mm.

In Examples 1 to 5 and Comparative Examples 1 to 4, a drawn line permeability (T) and a drawn line brightness L* when written on a black paper having a brightness L* of 28 were measured by the following methods.

Further, the solid drawing materials of each color obtained above were evaluated for a drawn line permeability T, a flexural strength and a color development of a drawn line by the following test methods. The results thereof are sown in the following Table 1.

Method for measuring drawn line permeability T

The resulting respective solid drawing materials, a white quality paper (brightness L*: 93 to 94) and a black quality paper (brightness L*: 27 to 28) were used to measure L*w (brightness of a drawn line written on a white paper), L*b (brightness of a drawn line written on a black paper and L*p (brightness of a black paper) in L*a *b* (CIE LAB) color system of a drawn line given on a full region of 1 cm × 1 cm of a white paper by means of a microsurface spectral color difference meter SS7700 manufactured by Nippon Denshoku Industries Co. Ltd.A drawn line permeability T was calculated by the equation (I) described above.

L*p: brightness of a black paper: 28

Test method:

(Evaluation method of flexural strength)

A flexural strength was measured based on JIS-S-60055-2007 (n = 20) .

(Evaluation method of drawn line color development)

Shown by a chrome ($a^2 + b^2$) in a L*a b value measured by means of a spectral colorimeter similarly to a concentration measurement method using a drawing device based on JIS-S-60055-2007 (n = 20) .

Table 1

| | Example | | | | | Comparative Example | | | |
|---|---|---|---|---|---|---|---|---|---|
| | 1 | 2 | 3 | 4 | 5 | 1 | 2 | 3 | 4 |
| Skeleton extender | talc | | | | | Boron nitride | | | graphite |
| Skeleton clay | natural | synthesis | | | | synthesis | | | |
| Color | red | white | red | blue | black | white | red | blue | black |
| L*w | 65 | 91 | 63 | 73 | 51 | 89 | 63 | 75 | 49 |
| L*b | 40 | 54 | 37 | 43 | 32 | 68 | 49 | 57 | 47 |
| L*p | 28 | | | | | 28 | | | |
| Drawn line Permeability (T) | 2.1 | 1.4 | 2.8 | 2.1 | 4.2 | 0.5 | 0.7 | 0.6 | 0.1 |
| Mechanical Strength (MPa) | 93 | 45 | 94 | 92 | 95 | 47 | 91 | 95 | 65 |
| Color development (L*ab) | 47.9 | 1.8 | 50.9 | 32.3 | 2.0 | 1.5 | 44.3 | 27.1 | 1.0 |

It has turned out from the results shown in Table 1 described above that the calcined solid drawing materials obtained in Examples 1 to 5 falling in a scope of the present invention have an equivalent strength and are excellent in items of a drawn line permeability and a drawn line color development as compared with the calcined solid drawing materials of the respective colors obtained in Comparative Examples 1 to 4 falling outside a scope of the present invention.

INDUSTRIAL APPLICABILITY

The calcined solid drawing materials which can be suitably used for solid making and underlining are obtained.

**Claims**

1. A calcined solid drawing material is provided with a skeleton core constituted by at least an extender and a binder, wherein a drawn line permeability T calculated by the following equation (I) concerning the drawn line is 0.8 or more:

$$T = (L^*w - L^*b)/(L^*b - L^*p) \qquad (I)$$

L*w: brightness of a drawn line written on white paper
L*b: brightness of a drawn line written on a black paper
L*p: brightness of the black paper.

2. The calcined solid drawing material as described in claim 1, wherein a drawn line brightness (L*) is 60 or lower when drawn on a black paper having a brightness of 28.

3. The calcined solid drawing material as described in claim 1 or 2, wherein talc is contained as the extender.

4. The calcined solid drawing material as described in any one of claims 1 to 3, wherein smectite group clay is contained as the binder.

5. The calcined solid drawing material as described in claim 4, wherein the smectite group clay is industrially synthesized and produced.

## INTERNATIONAL SEARCH REPORT

| International application No. |
|---|
| PCT/JP2021/022271 |

**A. CLASSIFICATION OF SUBJECT MATTER**
B43K 19/00(2006.01)i; C09D 13/00(2006.01)i
FI: C09D13/00; B43K19/00 D

According to International Patent Classification (IPC) or to both national classification and IPC

**B. FIELDS SEARCHED**

Minimum documentation searched (classification system followed by classification symbols)
B43K19/00; C09D13/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| A | JP 2015-227426 A (MITSUBISHI PENCIL CO., LTD.) 17 December 2015 (2015-12-17) examples | 1-5 |
| A | JP 2010-77329 A (PENTEL CO., LTD.) 08 April 2010 (2010-04-08) examples | 1-5 |
| A | JP 2005-23182 A (PILOT PRECISION CO., LTD.) 27 January 2005 (2005-01-27) examples | 1-5 |
| A | JP 2009-29906 A (MITSUBISHI PENCIL CO., LTD.) 12 February 2009 (2009-02-12) examples | 1-5 |
| A | JP 2019-99633 A (PILOT CORPORATION) 24 June 2019 (2019-06-24) examples | 1-5 |
| A | JP 8-302269 A (BUNCHO CORPORATION) 19 November 1996 (1996-11-19) examples | 1-5 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 August 2021 (13.08.2021) | 31 August 2021 (31.08.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2021/022271 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-285250 A (PILOT PRECISION CO., LTD.) 14 October 2004 (2004-10-14) examples | 1-5 |

Form PCT/ISA/210 (continuation of second sheet) (January 2015)

INTERNATIONAL SEARCH REPORT

Information on patent family members

International application No.

PCT/JP2021/022271

| Patent Documents referred in the Report | Publication Date | Patent Family | Publication Date |
|---|---|---|---|
| JP 2015-227426 A | 17 Dec. 2015 | (Family: none) | |
| JP 2010-77329 A | 08 Apr. 2010 | (Family: none) | |
| JP 2005-23182 A | 27 Jan. 2005 | (Family: none) | |
| JP 2009-29906 A | 12 Feb. 2009 | (Family: none) | |
| JP 2019-99633 A | 24 Jun. 2019 | (Family: none) | |
| JP 8-302269 A | 19 Nov. 1996 | US 5725642 A examples EP 742273 A2 KR 10-1996-0041299 A | |
| JP 2004-285250 A | 14 Oct. 2004 | (Family: none) | |

Form PCT/ISA/210 (patent family annex) (January 2015)

13

**REFERENCES CITED IN THE DESCRIPTION**

**Patent documents cited in the description**

- JP 2016302269 A
- JP 2004285250 A
- JP 2004315602 A
- JP 2005023182 A
- JP 2019099633 A